# EUROPÄISCHE PATENTSCHRIFT

(11) **EP 2 751 789 B1**
(45) Veröffentlichungstag und Bekanntmachung des Hinweises auf die Patenterteilung: **29.04.2020**
(21) Anmeldenummer: 12753474.1
(22) Anmeldetag: 28.08.2012
(51) Int. Cl.: G07D 7/12, G07D 7/20

(54) **VORRICHTUNG ZUR DOKUMENTENERKENNUNG**
APPARATUS FOR IDENTIFYING DOCUMENTS
DISPOSITIF D'IDENTIFICATION DE DOCUMENT

(30) Priorität: 01.09.2011 DE 102011082028
(43) Veröffentlichungstag der Anmeldung: 09.07.2014
(73) Patentinhaber: Bundesdruckerei GmbH, 10969 Berlin (DE)
(72) Erfinder: KOMAROV, Ilya, 10589 Berlin (DE); DRESSEL, Olaf, 14641 Wustermark (DE); FRITZE, Frank, 12487 Berlin (DE); PAESCHKE, Manfred, 16352 Basdorf (DE)
(74) Vertreter: Patentship Patentanwaltsgesellschaft mbH
(86) Internationale Anmeldenummer: PCT/EP2012/066675
(87) Internationale Veröffentlichungsnummer: WO 2013/030186

(56) Entgegenhaltungen:
- EP-A1- 1 168 253
- WO-A1-2006/092626
- WO-A1-2007/006703
- WO-A2-2006/127840
- DE-A1- 10 224 256
- DE-A1-102004 056 007
- US-A1- 2008 267 514

## Beschreibung

Die vorliegende Erfindung betrifft das Gebiet der Dokumentenerkennung.

Moderne Dokumente, beispielsweise Identifikationsdokumente, Führerscheine, Kraftfahrzeugbriefe, Banknoten oder andere Urkunden, sind üblicherweise mit optisch erfassbaren Dokumentenmerkmalen versehen, welche als Sicherheitsmerkmale im Rahmen einer Dokumentenerkennung eine Überprüfung eines Dokumentes auf Echtheit ermöglichen. Zur Dokumentenerkennung werden derartige Dokumentenmerkmale optisch erfasst und ausgewertet.

Zur Auswertung der erfassten Dokumentenmerkmale der Dokumentenerkennung werden üblicherweise Dokumentenerkennungsalgorithmen eingesetzt, welche beispielsweise einen Vergleich eines Dokumentenmerkmals mit einem Referenzmerkmal durchführen. Bei Übereinstimmung des Dokumentenmerkmals mit dem Referenzmerkmal wird beispielsweise die Echtheit des Dokumentes erkannt. Unterscheidet sich das Dokumentenmerkmal von dem Referenzmerkmal, so wird das Dokument als falsch eingestuft. Die Dokumentenerkennung kann jedoch auch auf der Basis von komplexeren Dokumentenerkennungsalgorithmen durchgeführt werden, bei denen beispielsweise eine Wavelet-Transformation eines Dokumentenmerkmals durchgeführt wird, wie es in der Druckschrift WO2007/105890 beschrieben ist.

Zur Dokumentenerkennung werden üblicherweise komplexe, stationäre Prüfgeräte eingesetzt, welche die für die Durchführung der Dokumentenerkennung notwendigen Ressourcen bereitstellen. Derartige Prüfgeräte sind jedoch teuer in der Anschaffung und komplex in der Entwicklung. Eine Adaption derartiger Prüfgeräte an neue Technologien zur Dokumentenerkennung ist daher aufwendig.

Die Offenlegungsschrift WO 2006/127840 A2 beschreibt, wie anhand eines Smartphones mit einem spektroskopischen Sensor ein Raman-Spektrum eines Sicherheitsmerkmals einer ID-Karte aufgenommen werden kann. Das Spektrum wird dann an einen zentralen Server gesendet, um dieses zu analysieren. Eine entsprechende Analyse kann auch auf dem Smartphone selber erfolgen.

Die Offenlegungsschrift WO 2006/092626 A1 zeigt ein Verfahren zur Authentifizierung oder Validierung von Banknoten.

Die Offenlegungsschrift US 2008/267514 A1 beschreibt ein Authentifizierungssystem mit einem Authentifizierungsprozessor zum Authentifizieren von Objekten, beispielsweise einem Führerschein.

Die Offenlegungsschrift DE 10 2004 056 007 A1 zeigt eine mobile Verifikationseinrichtung zur Echtheitsüberprüfung von Reisedokumenten.

Die Offenlegungsschrift EP 1 168 253 A1 zeigt ein Verfahren und eine Vorrichtung zur Authentifizierung eines Sicherheitsdokumentes.

Die Offenlegungsschrift WO 2007/006703 A1 zeigt ein Verfahren zur Bildverarbeitung in mobilen Endgeräten wie beispielsweise einem Mobiltelefon umfassend eine Kamera.

Die Offenlegungsschrift DE 102 24 256 A1 zeigt eine gerätetechnische Einrichtung zur Feststellung bestimmter Merkmale von Dokumenten wie beispielsweise Banknoten.

Es ist daher die Aufgabe der vorliegenden Erfindung, ein Dokumentenerkennungskonzept zu schaffen, das eine Dokumentenerkennung mittels eines einfacheren, insbesondere mobilen Gerätes wie eines Smartphones, ermöglicht.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass die obige Aufgabe durch ein verteiltes Dokumentenerkennungskonzept realisiert werden kann. Hierbei kann eine Vorrichtung zur Dokumentenerkennung, beispielsweise ein Prüfgerät, entscheiden, ob die Dokumentenerkennung gänzlich oder teilweise lokal oder mittels eines entfernten Servers durchgeführt werden soll. Die Entscheidung kann auf der Basis der verfügbaren Ressourcen der Vorrichtung zur Dokumentenerkennung, des entfernten Servers oder des Kommunikationsnetzwerkes, das die Vorrichtung zur Dokumentenerkennung mit dem entfernten Server verbinden kann, getroffen werden. Die Ressourcen umfassen beispielsweise Rechenleistung, Speicherkapazität, Datenübertragungsgeschwindigkeit oder für die Datenübertragung über das Kommunikationsnetzwerk zur Verfügung stehende Bandbreite.

Gemäß einem Aspekt betrifft die Erfindung eine Vorrichtung zur Dokumentenerkennung gemäß Anspruch 1. Das Dokumentenmerkmal kann beispielsweise ein Sicherheitsmerkmal des Dokumentes sein, das beispielsweise optisch erfassbar ist.

Die Kommunikationsnetzwerkadresse kann beispielsweise eine IP-Adresse eines entfernten Servers sein.

Das Dokumentenmerkmal selbst kann als Datensatz vorliegen. Der Begriff "Datensatz" umfasst somit als Oberbegriff sowohl das Dokumentenmerkmal als auch den von dem Dokumentenmerkmal abhängigen Datensatz.

Das Dokument kann eines der folgenden Dokumente, mit oder ohne Elektronik, sein: Identitätsdokument, wie Personalausweis, Reisepass, Zugangskontrollausweis, Berechtigungsausweis, Unternehmensausweis oder Kreditkarte, Steuerzeichen oder Ticket, Geburtsurkunde, Führerschein oder Kraftfahrzeugausweis, Banknote, Scheck, Postwertzeichen, oder ein anderes Zahlungsmittel, beispielsweise eine Bankkarte oder Kreditkarte. Das Dokument kann ein- oder mehrlagig bzw. papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Vorrichtung kann gemäß einer Implementierungsform ausgebildet sein, unter Verwendung einer der folgenden Kommunikationstechnologien zu kommunizieren: GSM, LTE, UMTS, CDMA, Bluetooth oder WLAN oder andere an sich bekannte Kommunikationstechnologien.

Gemäß einer Ausführungsform ist die Erfassungseinrichtung eine optische Erfassungseinrichtung, insbesondere eine Digitalkamera, oder die Erfassungseinrichtung umfasst einen optischen Bildsensor. Der optische Bildsensor kann beispielsweise ein CMOS-Bildsensor sein.

Gemäß einer Ausführungsform ist das Verarbeitungskriterium erfüllt, falls die verfügbaren Verarbeitungsressourcen der Vorrichtung zur Durchführung der Dokumentenerkennung, insbesondere mittels eines vorbestimmten Dokumentenerkennungsalgorithmus, ausreichend sind, oder falls die Größe des Dokumentenmerkmals einen vorgegebenen Schwellwert unterschreitet, oder falls eine Datenübertragungsgeschwindigkeit des Kommunikationsnetzwerkes einen Schwellwert unterschreitet. Das Verarbeitungskriterium ist hingegen nicht erfüllt, falls die verfügbaren Verarbeitungsressourcen der Vorrichtung zur Durchführung der Dokumentenerkennung nicht ausreichend sind, oder falls die Größe des Dokumentenmerkmals einen vorgegebenen Schwellwert überschreitet, oder falls eine Verbindungsgeschwindigkeit über das Kommunikationsnetzwerk einen Schwellwert unterschreitet.

Die verfügbaren Verarbeitungsressourcen können anhand einer Ressource-Allocation-Tabelle, beispielsweise einer Lookup-Tabelle, ermittelt werden. Darin können auch beispielsweise die für die Dokumentenerkennung typischerweise notwendigen Ressourcen gespeichert werden, insbesondere für unterschiedliche Dokumentenerkennungsalgorithmen.

Bei den Dokumentenerkennungsalgorithmen kann es sich beispielsweise um Mustervergleiche oder um komplexere Transformations-basierte Dokumentenerkennungsalgorithmen handeln, welche an sich bekannt sind. Für die Mustererkennung können auf einem Mobilgerät Algorithmen wie PCA (Principal Component Analysis), d.h. Verfahren zur Klassifikation von Mustern durch Transformation, und Baumsuche durchgeführt werden. Für die Mustererkennung können auf einem Server Algorithmen wie Neuronales Netzwerk (NN) oder hierauf basierende Verfahren, welche durch Anlernen mittels einer oder mehrerer Beispielklassen die Fähigkeit der Klassifizierung dieser Daten herausbilden, und Support Vector Maschine (SVM) ausgeführt werden.

Anhand eines Vergleichs zwischen den verfügbaren Verarbeitungsressourcen und den zur Dokumentenerkennung notwendigen Verarbeitungsressourcen kann festgestellt werden, ob die Vorrichtung einen vorbestimmten Dokumentenerkennungsalgorithmus ausführen kann. Überschreiten beispielsweise die notwendigen Verarbeitungsressourcen die verfügbaren Verarbeitungsressourcen, so kann der Prozessor entscheiden, die Dokumentenerkennung beispielsweise an einen entfernten Server, welcher unter der Kommunikationsnetzwerkadresse erreichbar ist, auszulagern. Andernfalls kann der Prozessor entscheiden, die Dokumentenerkennung lokal, d.h. auf der Vorrichtung, durchzuführen.

Das Verarbeitungskriterium kann jedoch auch mit der Größe des Dokumentenmerkmals, das als ein Datensatz vorliegen kann, zusammenhängen. Überschreitet die Größe des Dokumentenmerkmals einen vorgegeben Schwellwert, welcher beispielsweise eine Anzahl von Pixeln angeben kann, so kann der Prozessor entscheiden, die Dokumentenerkennung an beispielsweise einen entfernten Server auszulagern, weil beispielsweise die für die Dokumentenerkennung auf der Basis eines derartigen Dokumentenmerkmals notwendigen Speicherressourcen der Vorrichtung nicht ausreichend sind.

Ist die Datenübertragungsgeschwindigkeit des Kommunikationsnetzwerkes beispielsweise höher als ein vorgegebener Schwellwert, so kann der Prozessor ebenfalls entscheiden, die Dokumentenerkennung an einen entfernten Server auszulagern, um eine schnellere Dokumentenerkennung zu ermöglichen, als dies beispielsweise mittels der Vorrichtung möglich wäre. Unterschreitet die Datenübertragungsgeschwindigkeit des Kommunikationsnetzwerks, insbesondere die Datenübertragungsgeschwindigkeit zwischen der Vorrichtung und dem entfernten Server, dessen Netzwerkadresse die Kommunikationsnetzwerkadresse sein kann, einen vorgegeben Schwellwert, so kann der Prozessor entscheiden, die Dokumentenerkennung lokal, d.h. mittels der Vorrichtung durchzuführen. Dadurch kann die Dokumentenerkennung schneller durchgeführt werden als dies durch eine Auslagerung derselben an den entfernten Server möglich wäre.

Der folgende Gegenstand wird nicht beansprucht. Beschrieben wird ein Prozessor, der ausgebildet ist, die verfügbaren Verarbeitungsressourcen der Vorrichtung zu bestimmen und zu ermitteln, ob die verfügbaren Verarbeitungsressourcen für die Dokumentenerkennung mittels des Prozessors ausreichend sind, wobei die verfügbaren Verarbeitungsressourcen zumindest eine der folgenden Ressourcen umfassen: Rechenleistung des Prozessors oder Größe des verfügbaren Speichers der Vorrichtung, oder Verfügbarkeit eines Dokumentenerkennungsalgorithmus. Die verfügbaren Verarbeitungsressourcen können beispielsweise anhand einer Ressource-Allocation-Tabelle bestimmt werden.

Gemäß einer Ausführungsform ist der Prozessor ausgebildet, die Datenübertragungsgeschwindigkeit des Kommunikationsnetzwerkes oder die zur Verfügung stehende Übertragungsbandbreite zu bestimmen. Zur Bestimmung der Datenübertragungsgeschwindigkeit oder der Übertragungsbandbreite kann der Prozessor beispielsweise eine Messung einer Antwortzeit eines entfernten Gerätes, beispielsweise Servers, im Kommunikationsnetzwerk oder eine Messung eines Datendurchsatzes ermitteln. Hierzu kann die Vorrichtung ferner einen Empfänger aufweisen, um eine Antwort des entfernten Gerätes zu empfangen.

Gemäß einer Ausführungsform ist der Prozessor ausgebildet, den von dem Dokumentenmerkmal abhängigen Datensatz zu erzeugen, insbesondere wie nachstehend ausgeführt zu erzeugen:
Gemäß einer Ausführungsform ist der Prozessor ausgebildet, den von dem Dokumentenmerkmal abhängigen Datensatz durch eine Anonymisierung des Dokumentenmerkmals, welche eine Rekonstruktion des Dokumentenmerkmals unterbindet, zu erzeugen, insbesondere durch Segmentierung oder Rasterung des Dokumentenmerkmals oder durch Extraktion beschreibender Elemente des Dokumentenmerkmals oder durch eine Transformation des Dokumentenmerkmals, insbesondere durch eine Fourier-Transformation oder durch eine Wavelet-Transformation oder durch eine Filtertransformation, oder durch eine Scale-Invariant-Feature-Transformation (SIFT) oder durch eine Segmentierung einer Transformierten des Dokumentenmerkmals, insbesondere einer Fourier-Transformierten, einer Wavelet-Transformierten oder einer SIFT-Transformierten, oder durch eine Speeded Up Robust Feature-Detektion (SURF) oder durch die Erzeugung eines Hologramms aus dem Dokumentenmerkmal oder durch die Erzeugung eines Histogramms auf der Basis des Dokumentenmerkmals oder durch die optische Zeichenerkennung (OCR: Optical Character Recognition) oder durch die Erfassung einer Mikroschrift. Durch die Anonymisierung wird erreicht, dass eine Rekonstruktion des Dokumentenmerkmals nicht möglich ist. Auf diese Weise wird sichergestellt, dass das anonymisierte Dokumentenmerkmal, das in der Gestalt von Daten vorliegen kann, keinen inhaltlichen Bezug zu dem Dokument hat und somit keine Rekonstruktion des Dokumentes bzw. des Dokumentenmerkmals ermöglicht.

Die Transformierte des Dokumentenmerkmals kann insbesondere mittels einer der vorgenannten Transformationen durchgeführt werden.

Zur Erzeugung des Histogramms auf der Basis des Dokumentenmerkmals können beispielsweise Häufigkeiten eines Auftretens eines Elementes des Dokumentenmerkmals, beispielsweise eines Buchstabens, erfasst und in dem Histogramm festgehalten werden. Gemäß einer Ausführungsform weist die Vorrichtung ferner einen Empfänger zum Empfangen eines Ergebnisses der Dokumentenerkennung von der Kommunikationsnetzwerkadresse über das Kommunikationsnetzwerk ansprechend auf das Aussenden des von dem Dokumentenmerkmal abhängigen Datensatzes auf. Durch das Aussenden des Dokumentenmerkmals an die Kommunikationsnetzwerkadresse wird das Dokumentenmerkmal beispielsweise an einen entfernten Server zur ausgelagerten Dokumentenerkennung ausgesendet. Der entfernte Server führt die Dokumentenerkennung auf der Basis des Dokumentenmerkmals oder auf der Basis eines von dem Dokumentenmerkmal abhängigen Datensatzes durch und übersendet ein Ergebnis, das ein Teilergebnis sein kann, der Dokumentenerkennung über das Kommunikationsnetzwerk zu der Vorrichtung. Die Vorrichtung kann daraufhin das Ergebnis der Dokumentenerkennung entweder unmittelbar anzeigen oder zur weiteren Dokumentenerkennung verwenden. Der Empfänger kann mit dem Sender eine Sende-Empfangseinheit bilden.

Gemäß einer Ausführungsform ist das Ergebnis ein Teilergebnis der Dokumentenerkennung, und der Prozessor ist ausgebildet, das Teilergebnis für die Dokumentenerkennung zu verwenden.

Gemäß einer Ausführungsform ist der Sender ausgebildet, den von dem Dokumentenmerkmal abhängigen Datensatz über das Kommunikationsnetzwerk an einen Verarbeitungsserver, welcher unter der Kommunikationsnetzwerkadresse erreichbar ist, zum Durchführen der Dokumentenerkennung auszusenden.

Gemäß einer Ausführungsform ist ein mobiles Telekommunikationsgerät, insbesondere ein Smartphone.

Gemäß einer Ausführungsform betrifft die Erfindung ein Verfahren zur Dokumentenerkennung, gemäß Anspruch 10.

Weitere Merkmale des Verfahrens zur Dokumentenerkennung ergeben sich unmittelbar aus der Funktionalität der Vorrichtung zur Dokumentenerkennung.

Gemäß einem weiteren Aspekt betrifft die Erfindung ein Computerprogramm zum Ausführen zumindest eines der vorgenannten und nachfolgend beschriebenen Verfahren, wenn das Computerprogramm auf einem Computer ausgeführt wird.

Weitere Ausführungsbeispiele werden Bezug nehmend auf beiliegende Zeichnungen näher erläutert. Es zeigen:
- Fig. 1: ein Blockdiagramm einer Vorrichtung zur Dokumentenerkennung gemäß einer Ausführungsform;
- Fig. 2: ein Ablaufdiagramm eines Verfahrens zur Dokumentenerkennung gemäß einer Ausführungsform;
- Fig. 3: ein Ablaufdiagramm eines Verfahrens zur Dokumentenerkennung gemäß einer Ausführungsform;
- Fig. 4: ein Ablaufdiagramm eines Verfahrens zur Dokumentenerkennung gemäß einer Ausführungsform;
- Fig. 5: ein Ablaufdiagramm eines Verfahrens zur Dokumentenerkennung gemäß einer Ausführungsform;
- Fig. 6: ein Ablaufdiagramm eines Verfahrens zur Dokumentenerkennung gemäß einer Ausführungsform;

Gemäß einer Ausführungsform kann der von dem Dokumentenmerkmal abhängige Datensatz das Dokumentenmerkmal selbst sein. Gemäß einer anderen Ausführungsform kann der Datensatz ein verarbeitetes Dokumentenmerkmal, beispielsweise ein anonymisiertes Dokumentenmerkmal, sein.

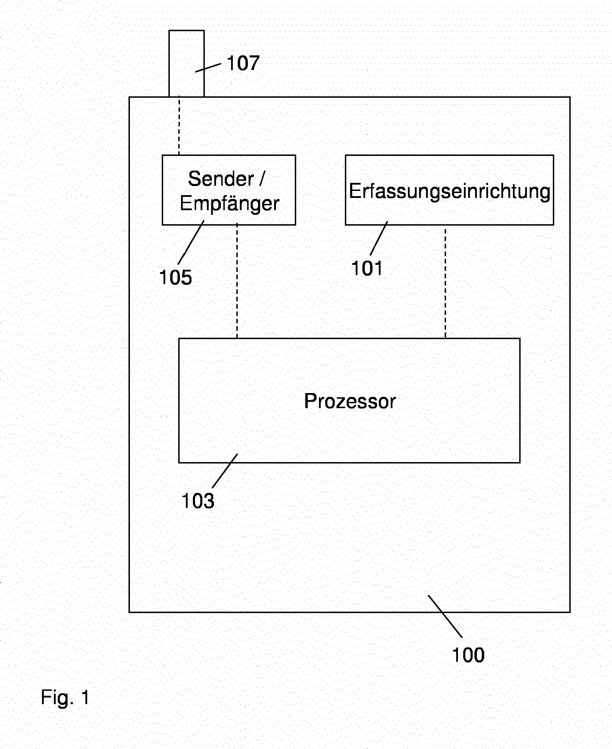

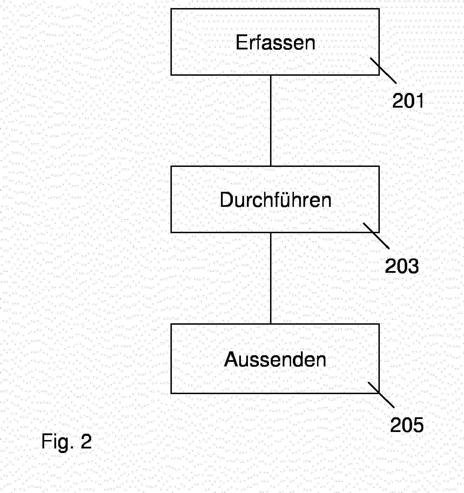

Das in Fig. 2 dargestellte Verfahren kann beispielsweise mittels der in Fig. 1 dargestellten Vorrichtung ausgeführt werden.

Zur Dokumentenerkennung kann beispielsweise ein Vergleich bzw. eine Analyse des Dokumentenmerkmals durchgeführt werden. Das Dokumentenmerkmal kann beispielsweise mittels Bildverarbeitung gewonnene Beschreibungsdaten des Dokumentes oder eines Sicherheitsmerkmals des Dokumentes aufweisen. Durch die Möglichkeit der Verlagerung einzelner Dokumentenerkennungsschritte oder der gesamten Dokumentenerkennung kann die Prüfung von Dokumenten mittels eines mobilen Kommunikationsgerätes durchgeführt werden, das beispielsweise durch einen entfernten Server unterstützt werden kann. Somit kann die Dokumentenerkennung vollständig durch beispielsweise die in Fig. 1 dargestellte Vorrichtung oder vollständig durch einen entfernten Server durchgeführt werden, an welchen das Dokumentenmerkmal bzw. der von diesem abhängige Datensatz zwecks Dokumentenerkennung übermittelt wird. Es können aber auch einzelne Dokumentenerkennungsroutinen bzw. Aufgaben einzeln, gemeinsam oder nacheinander ausgeführt werden.

Gemäß einer Ausführungsform kann die verteilte Dokumentenerkennung dergestalt erfolgen, dass beispielsweise eine Applikationssoftware, welche auf der Vorrichtung 100 ausgeführt wird, nach Prüfung der vorliegenden Bedingungen, wie beispielsweise der verfügbaren Rechnerleistung der Vorrichtung, der Bildgröße, d.h. der Größe des Dokumentenmerkmals, der Verbindungsgeschwindigkeit zum entfernten Server, die Verarbeitungsschritte zur Dokumentenerkennung entweder lokal, d.h. mittels der Vorrichtung 100, oder zentral mittels eines entfernten Servers durchführt. Bei der Prüfung der vorliegenden Bedingungen wird insbesondere geprüft, ob ein Verarbeitungskriterium erfüllt ist. Gemäß einer Ausführungsform kann die Dokumentenerkennung gleichzeitig mittels der Vorrichtung 100 sowie mittels des entfernten Servers begonnen werden, wobei das Dokumentenerkennungsergebnis derjenigen Entität verwendet wird, welche als erste das Dokumentenerkennungsergebnis liefert.

Der folgende Gegenstand wird nicht beansprucht. Als Verarbeitungskriterium können neben den vorgenannten Parametern, wie die verfügbare Rechenleistung der Vorrichtung, die Bildgröße, die Verbindungsgeschwindigkeit zum Server weiter Parameter, das Untersuchungsziel oder der Sicherheitsanspruch berücksichtigt werden. Bei dem Untersuchungsziel kann beispielsweise entschieden werden, ob eine einfache Dokumentenerkennung oder ob eine komplexe Dokumentenerkennung, welche eine Tiefenprüfung ermöglicht, durchgeführt werden soll. Der Sicherheitsanspruch legt fest, ob die zum entfernten Server zu übertragenden Daten verschlüsselt, stark verschlüsselt oder nicht verschlüsselt werden.

Für die Abwägung der Prozesszeit als Verarbeitungskriterium ergibt sich die Abarbeitungszeit aus der Abarbeitungszeit auf der Vorrichtung 100 TG, die Transferzeit zum entfernten Server TF (Transfer Forward), die Verarbeitungszeit auf dem entfernten Server TS sowie die Rücktransferzeit TB (Transferred Backward) zur Vorrichtung 100 hin. Die Verarbeitung eines Prozessschrittes auf der Vorrichtung 100 ist beispielsweise dann sinnvoll, falls TG < TF + TS + TB. Die vorgenannten Koeffizienten können sowohl statische als auch dynamische Parameter berücksichtigen. Statische Parameter sind beispielsweise die Rechenleistung der Vorrichtung 100, beispielsweise des Prozessors 103 bzw. der die Vorrichtung realisierenden Hardware-Plattform, auf der Berechnungen durchgeführt werden. Die Rechenleistung wird üblicherweise in MIPS angegeben. Dynamische Parameter sind beispielsweise Transferzeiten, welche anhand einer Messung einer Antwortzeit des entfernten Servers im Kommunikationsnetzwerk, so genannter PING-Messung, oder durch ein Transferverfahren ermittelt werden, bei dem ein Datendurchsatz ermittelt wird.

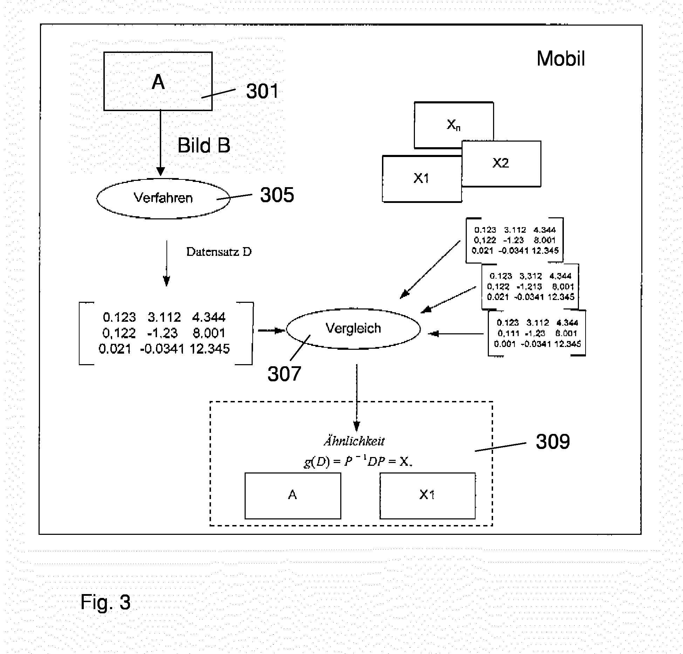

Fig. 3 zeigt ein Ablaufdiagramm eines Verfahrens zur Dokumentenerkennung, bei dem zu einem Quelldokument 301 (A) ein ähnliches oder gleiches, d.h. das die gleiche digitale Beschreibung des Quelldokumentes (A) aufweisende Dokument X gesucht wird. Hierzu wird von dem Quelldokument 301 im Schritt 303 ein Bild B angefertigt. Das Bild B repräsentiert beispielsweise ein erfasstes Dokumentenmerkmal. Gemäß einer Ausführungsform wird das Bild B mittels des Verfahrens 305 bearbeitet, welches beispielsweise beschreibende Merkmale aus dem Bild B in einen Beschreibungsdatensatz D extrahiert.

Diese Merkmale können beispielsweise statistische oder zufällig gestreute Eigenschaftspunkte betreffen. Gemäß einer Ausführungsform stehen diese Merkmale weder unmittelbar inhaltlich, beispielsweise als Text, noch bildlich, beispielsweise als Muster, mit dem Dokument 301 in einem Zusammenhang. Das bedeutet, dass aus diesem Datensatz keine Rekonstruktion des Dokumentes möglich ist. Die hierzu anwendbaren Verfahren können beispielsweise SIFT, SURF oder andere bekannte Transformationen, wie z.B. die Fourier-Transformation oder die Wavelet-Transformation, sein.

In einem nächsten Schritt 307 erfolgt eine Prüfung des Datensatzes D, welcher ein Beschreibungsdatensatz sein kann, gegen eine endliche Menge von Datensätzen M {Xₙ}. Die Datensätze sind beispielsweise mit dem gleichen oder einem zum Verfahren 305 gehörenden Algorithmus durchgeführt worden. Die Prüfung 307 kann beispielsweise mittels eines Vergleiches durchgeführt werden, dessen Ergebnis eine direkte Aussage bezüglich einer Gleichheit oder bezüglich eines Grades einer Übereinstimmung ausdrücken kann. In einem abschließenden Schritt 309 erfolgt die Rückgabe von Informationen zum Musterdokument Xₙ, welches die höchste Übereinstimmung zu dem Quelldokument 301 aufweist. Das Musterdokument kann beispielsweise das Dokument X₁ sein.
Gemäß einer Ausführungsform kann beispielsweise die Suche eines Bildes durch einen auf einem entfernten Server bereitgestellten Dienst folgen. Hierzu kann beispielsweise ein Dokumentenbild mit einem mobilen Gerät, beispielsweise mit der in Fig. 1 dargestellten Vorrichtung, aufgenommen werden. In einem weiteren Schritt kann das aufgenommene Bild an den verarbeiteten entfernten Server gesendet werden. Hiernach kann das Extrahieren der Daten D und die Suche der entsprechenden Referenzen Xₙ sowie die Rückgabe der Referenzinformationen, beispielsweise des Referenzbildes P{Xₙ}, an das mobile Gerät zur Anzeige oder zur Verarbeitung durchgeführt werden.

Gemäß einer Ausführungsform kann eine Suche nach einer Ähnlichkeit zu gegebenen Referenzen auf einem mobilen Gerät, beispielsweise auf der in Fig. 1 dargestellten Vorrichtung, und/oder auf einem Server durchgeführt werden. Hierbei kann ein Dokumentenbild, das ein Dokumentenmerkmal repräsentiert, mittels der Vorrichtung aufgenommen werden. Hiernach können allgemeine Dokumenteneigenschaften, wie beispielsweise Größe oder Geometrie zur Benutzerrückmeldung im Hinblick auf eine Dokumentenlage bestimmt werden. Hiernach können beispielsweise die Bilderfassung und Extraktion der Merkmale beispielsweise mittels des Verfahrens 305 durchgeführt werden. Hiernach können die Suche der Übereinstimmung mit beispielsweise lokal vorhandenen Daten und Bereitstellung vorhandener Referenzdaten oder Anforderung weiterer Referenzdaten von einem Serverdienst durchgeführt werden. Die Suche kann erweitert werden durch eine Übersendung der extrahierten Daten D an einen ServerDienst, welcher auf dem entfernten Server ausgeführt wird. Bei erfolgreicher Zuordnung zu einer Referenz auf dem Server kann eine Rückmeldung der ermittelten Referenzdaten erfolgen. Bei fehlenden oder unsicher zugeordneten Referenzdaten können diese auf dem Server zwischengespeichert werden, wobei das Bild von dem mobilen Gerät angefordert werden kann. Das Bild kann serverseitig neu bewertet und bei erneut negativem Ergebnis der weiteren maschinellen oder manuellen Verarbeitung zugeführt werden.

Die vorgenannten Schritte können parallel ausgeführt werden. Hierbei können die Entscheidung und die Klassifizierung verteilt durchgeführt werden. Die Bearbeitung kann gemäß einer Ausführungsform sowohl mittels der Vorrichtung 100 als auch mittels des entfernten Servers unterbrochen werden, falls eine sichere Entscheidung getroffen wurde.

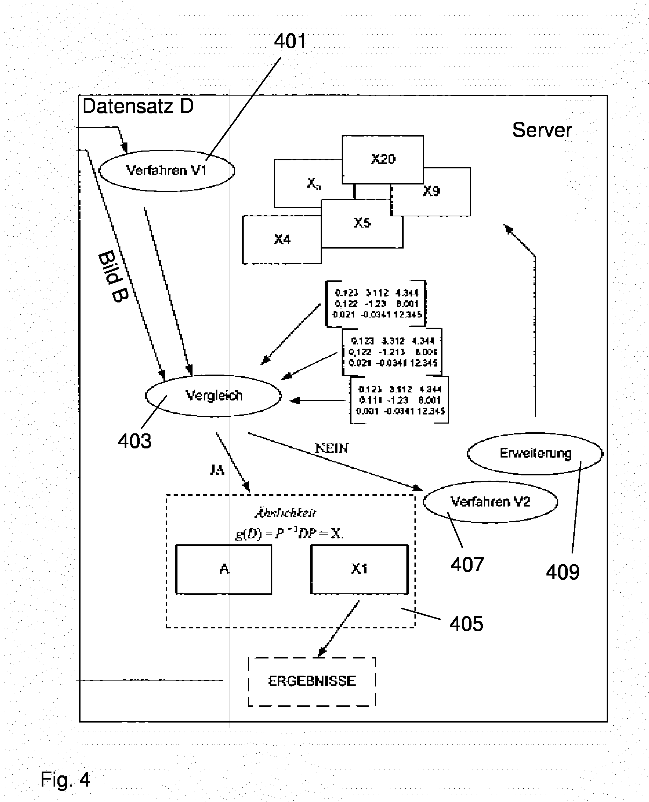

Fig. 4 zeigt ein Ablaufdiagramm eines Verfahrens zur Dokumentenerkennung, das sowohl mobil, beispielsweise mittels der in Fig. 1 dargestellten Vorrichtung bzw. des in Fig. 3 dargestellten Verfahrens, als auch mittels eines entfernten Servers durchgeführt werden kann.

Bezugnehmend auf das in Fig. 3 dargestellte Ausführungsbeispiel kann das Bild B des Dokumentes 301 an den entfernten Server übermittelt werden, welcher ein Verfahren 401 (V1) ausführt. Das Verfahren 401 kann beispielsweise mittels Transformation aus dem Bild B einen Datensatz D erzeugen, welcher einem Vergleichsschritt 403 zugeführt wird. Der Datensatz D und/oder und/das Bild B und/oder ein Teilergebnis und/oder bereits ermittelte Parameter können jedoch auch gemäß dem in Fig. 3 dargestellten Verfahren erzeugt, an den Server übermittelt und dem Vergleichschritt 403 unmittelbar zugeführt werden. In dem Vergleichschritt 403 werden die eingehenden Daten und Referenzparameter und/oder Dokumentenmerkmale verglichen, wobei diese optional in dem Erweiterungsschritt 409 um weitere Merkmale erweitert oder geändert werden können.

Bei Übereinstimmung des Datensatzes D mit einer der vorhandenen Referenzen Xₙ kann im Schritt 405 ein Ergebnis, wie es im Zusammenhang mit dem in Fig. 3 dargestellten Ausführungsbeispiel beschrieben wurde, ausgegeben werden. Das Ergebnis kann über ein Kommunikationsnetzwerk zurück übermittelt und angezeigt werden.

Bei fehlender Übereinstimmung kann ein weiteres Verfahren 407 (V2) durchgeführt werden, das beispielsweise komplexer ist. Hierbei kann auch die vorgenannte Erweiterung 409 vorgesehen sein, durch welche erneut auf die Referenzen Xₙ zurückgegriffen wird. Fällt der Vergleich positiv aus, so kann das Ergebnis übermittelt werden. Andernfalls kann in dem Verfahrensschritt 407 eine weitere, ggf. alternative Analyse durchgeführt werden.

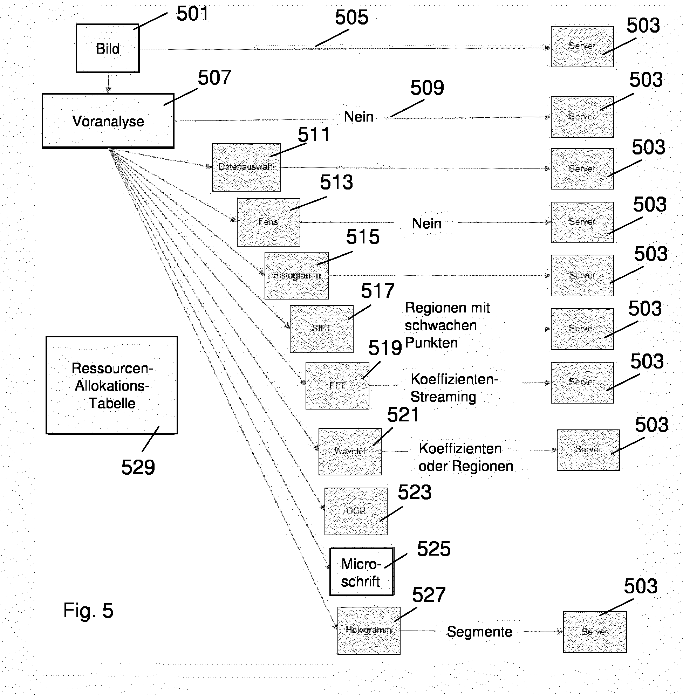

Fig. 5 zeigt ein Ablaufdiagramm eines Verfahrens zur Dokumentenerkennung, bei dem im Schritt 501 ein Abbild eines Dokumentes erzeugt wird, um ein Dokumentenmerkmal zu erfassen. Im Schritt 501 wird ferner die Ressourcenverfügbarkeit, also die Verfügbarkeit von Verarbeitungsressourcen, geprüft, um festzustellen, ob die Dokumentenerkennung lokal, d.h. beispielsweise auf einem mobilen Kommunikationsgerät, wie es gemäß einer Ausführungsform in Fig. 1 dargestellt ist, oder mittels eines entfernten Servers 503 ausgeführt werden soll. Falls die verfügbaren Ressourcen für die lokale Dokumentenerkennung nicht ausreichen, so wird das Dokumentenmerkmal im Schritt 505 an den entfernten Server 503 zur Dokumentenerkennung übermittelt. Der entfernte Server 503 führt die Dokumentenerkennung auf der Basis des empfangenen Dokumentenmerkmals oder, generell, eines Dokumentensatzes durch, welcher auch ein verarbeitetes Dokumentenmerkmal betreffen kann, und übermittelt das Ergebnis der Dokumentenerkennung zurück an die aussendende Entität. Der Schritt 505 des Aussendens ist jedoch optional.

Gemäß einer Ausführungsform kann jedoch nach dem Schritt 501 beispielsweise im Schritt 507 eine Voranalyse des Dokumentenmerkmals bzw. eines Dokumentendatensatzes durchgeführt werden, um zu entscheiden, welcher Dokumentenerkennungsalgorithmus, beispielsweise welches Bilderkennungsverfahren, zur Dokumentenerkennung angewendet werden soll. Nach der Voranalyse wird die Verfügbarkeit der lokal zur Verfügung stehenden Verarbeitungsressourcen geprüft. Sind zu wenige Verarbeitungsressourcen verfügbar, so wird das Dokumentenmerkmal oder ein von dem Dokumentenmerkmal ableitbarer Datensatz im Schritt 509 an den entfernten Server 503 zur Dokumentenerkennung übermittelt.

Statt des Schrittes 509 des Aussendens kann im Schritt 511 eine Datenauswahl durchgeführt werden, um einen Dokumentensatz zu erzeugen. Daraufhin wird die Verfügbarkeit der Verarbeitungsressourcen überprüft. In Abhängigkeit von der Verfügbarkeit der Verarbeitungsressourcen wird der ausgewählte Datensatz entweder lokal zur Dokumentenerkennung verwendet oder an den entfernten Server 503 übermittelt.

Alternativ kann nach dem Schritt 507 der Schritt 513 folgen, in dem das Dokumentenmerkmal beispielsweise gefiltert oder gefenstert wird. Hierbei können sog. Keypoints mittels des an sich bekannten Trees-and-Fens-Verfahrens angeordnet bzw. erfasst.

Vor dem Schritt 513 oder nach dem Schritt 513 wird die Verfügbarkeit der Ressourcen überprüft und die resultierenden Daten werden entweder lokal zur Dokumentenerkennung verwendet oder an den Server 503 zur Dokumentenerkennung übermittelt. Diese Daten können beispielsweise einige Transformationsebenen umfassen.
Alternativ kann nach dem Schritt 507 der Schritt 515 folgen, in dem auf der Basis des Dokumentenmerkmals ein Histogramm erzeugt wird. Vor oder nach dem Schritt 515 wird die Verfügbarkeit der Verarbeitungsressourcen überprüft. Das Histogramm wird in Abhängigkeit der verfügbaren Verarbeitungsressourcen entweder lokal zur Dokumentenerkennung verwendet oder an den entfernten Server 503 zur Dokumentenerkennung übermittelt.

Alternativ kann nach dem Schritt 507 der Schritt 517 folgen, in dem eine SIFT-Transformation des Dokumentenmerkmals erfolgt. Nach oder vor dem Schritt 517 wird die Verfügbarkeit der Verarbeitungsressourcen überprüft. In Abhängigkeit von den lokal verfügbaren Verarbeitungsressourcen wird der transformierte Satz entweder lokal zur Dokumentenerkennung verwendet oder an den Server 503 zur Dokumentenerkennung übermittelt. Hierbei können auch Regionen mit schwachen Punkten an den Server 503 übermittelt werden.

Alternativ kann nach dem Schritt 507 der Schritt 519 folgen, in dem die Fourier-Transformation, beispielsweise die Schnelle Fourier-Transformation (FFT: Fast Fourier Transform), durchgeführt wird. Vor oder nach dem Schritt 519 wird die Verfügbarkeit der Ressourcen geprüft. In Abhängigkeit von den verfügbaren Ressourcen werden die transformierten Daten entweder lokal zur Dokumentenerkennung verwendet oder an den entfernten Server 503 übermittelt. Hierbei können die Koeffizienten der Fourier-Transformation entweder durch so genanntes Streaming ausgesendet werden. Alternativ können ausgewählte Bilder bzw. Frequenzwerte ausgesendet werden.

Alternativ kann nach dem Schritt 507 der Schritt 521 der Wavelet-Transformation folgen. Nach oder vor dem Schritt 521 wird die Verfügbarkeit der Ressourcen geprüft. In Abhängigkeit von den verfügbaren Ressourcen werden die mittels der Wavelet-Transformation transformierten Daten entweder lokal zur Dokumentenerkennung verwendet oder werden an den entfernten Server 503 zur Dokumentenerkennung übermittelt. Hierbei können Koeffizienten oder bestimmte Transformationsregionen an den Server 503 übermittelt werden.

Alternativ können nach dem Schritt 507 jeweils weitere Schritte 523 des OCR; 525 der Mikroschritterfassung oder 527 der Hologrammerstellung folgen. Vor oder nach jedem dieser Schritte wird die Verfügbarkeit der Ressourcen überprüft. In Abhängigkeit der verfügbaren Ressourcen werden die jeweils erhaltenen Daten entweder lokal zur Dokumentenerkennung verwendet oder sie werden an den entfernten Server 503 ausgesendet. Im Falle der Hologrammerzeugung im Schritt 507 können beispielsweise ausgewählte Segmente an den Server zur genaueren Überprüfung ausgesendet werden.

Die Verfügbarkeit der Ressourcen kann beispielsweise auf der Basis einer Ressourcen-Allokationstabelle 529 durchgeführt werden, welche in einem Speicher einer lokalen Vorrichtung, beispielsweise der in Fig. 1 dargestellten Vorrichtung 100, abgelegt sein kann.

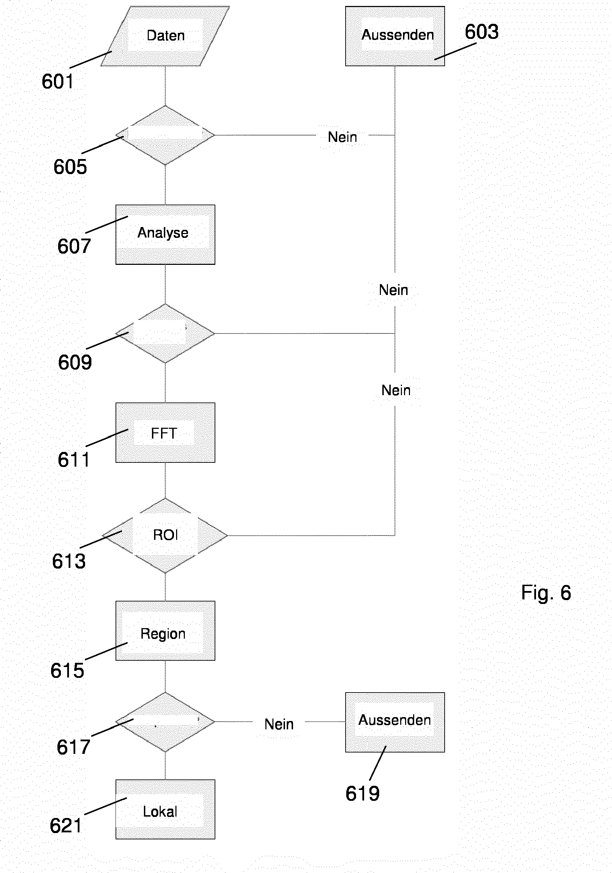

Fig. 6 zeigt ein Ablaufdiagramm eines Verfahrens zur Dokumentenerkennung mit dem Schritt 601 des Erfassens eines Dokumentenmerkmals anhand eines Dokumentes oder eines Erzeugens eines Datensatzes anhand des Dokumentenmerkmals sowie mit dem Schritt 603 des Aussendens des Dokumentenmerkmals oder des Datensatzes zu einem entfernten Server. Nach dem Schritt 601 werden im Schritt 605 die verfügbaren Ressourcen für die Dokumentenerkennung überprüft. Sind die verfügbaren Ressourcen für die lokale Dokumentenerkennung ausreichend, so wird im Schritt 607 eine Daten-Voranalyse durchgeführt. Anderenfalls werden die Daten im Schritt 603 zum entfernten Server ausgesendet.

Nach dem Schritt 607 wird im Schritt 609 überprüft, ob Merkmale, welche eine Dokumentenerkennung ermöglichen, gefunden wurden. Falls Merkmale gefunden wurden, so wird im Schritt 611 mit der schnellen Fourier-Transformation verfahren. Anderenfalls wird mit dem Schritt 603 weiter verfahren.

Nach dem Schritt 611 wird im Schritt 613 überprüft, ob die im Schritt 611 erzeugte Transformierte charakteristische Regionen, so genannte Regions of Interest (ROI), mit charakteristischen Frequenzen aufweist. Sind derartige Frequenzen vorhanden, so werden im Schritt 615 die dazugehörenden charakteristischen Regionen ausgewählt. Anderenfalls wird mit dem Schritt 603 weiter verfahren.

Nach dem Schritt 615 wird in Schritt 617 überprüft, ob die Dokumentenerkennung lokal fortgesetzt werden kann. Falls nicht, so werden die Regionen im Schritt 619 zu dem entfernten Server ausgesendet, welcher die Dokumentenerkennung durchführt. Anderenfalls wird nach dem Schritt 617 im Schritt 621 die Dokumentenerkennung lokal fortgesetzt.

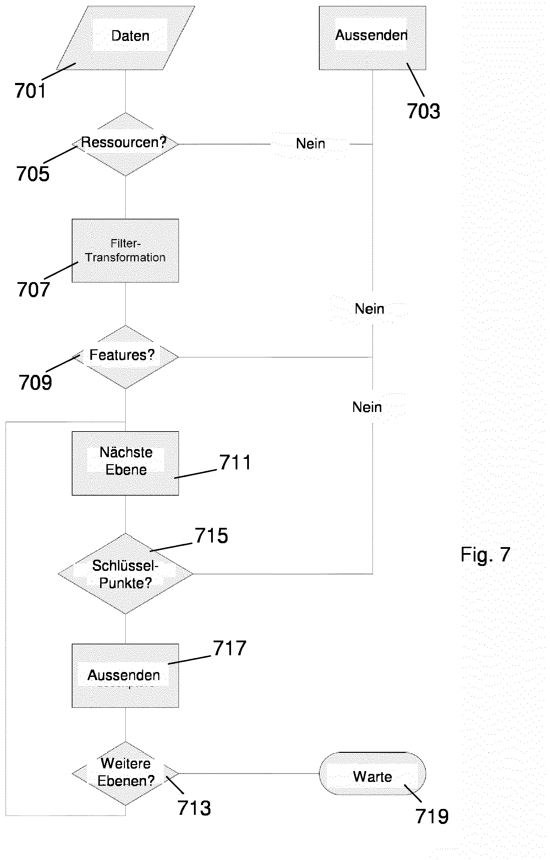

Fig. 7 zeigt ein Ablaufdiagramm eines Verfahrens zur Dokumentenerkennung mit dem Schritt 701 des Erfassens eines Dokumentenmerkmals bzw. des Ableitens eines Datensatzes aus dem Dokumentenmerkmal. In beiden Fällen werden Daten bereitgestellt. Das Verfahren umfasst ferner den Schritt 703 des Aussendens der Daten zu einem entfernten Server.

Nach dem Schritt 701 wird im Schritt 705 die Verfügbarkeit der Ressourcen überprüft. Sind ausreichend Ressourcen für die lokalen Dokumentenerkennung verfügbar, so wird im Schritt 707 eine Filtertransformation der Daten durchgeführt. Anderenfalls wird mit dem Schritt 703 verfahren.

Nach dem Schritt 707 wird im Schritt 709 überprüft, ob Merkmale gefunden wurden. Sind Merkmale gefunden, so wird im Schritt 711 eine höhere Dokumentenerkennungsstufe, ein so genanntes Next Level, ausgeführt. Anderenfalls wird mit dem Schritt 703 weiter verfahren. Alternativ kann nach dem Schritt 709 im Schritt 713 überprüft werden, ob weitere Levels benötigt werden.

Nach dem Schritt 711 wird im Schritt 715 überprüft, ob bekannte Schlüsselpunkte vorliegen. Liegen bekannte Schlüsselpunkte vor, so werden im Schritt 717 Schlüsselpunkte eines Beschreibers, sog. Descriptors, ausgesendet. Nach dem Schritt 717 wird mit dem Schritt 713 verfahren. Nach dem Schritt 713 wird das Verfahren beispielsweise mit dem Schritt 711 fortgesetzt. Alternativ kann im Schritt 719 auf weitere Ergebnisse gewartet werden.

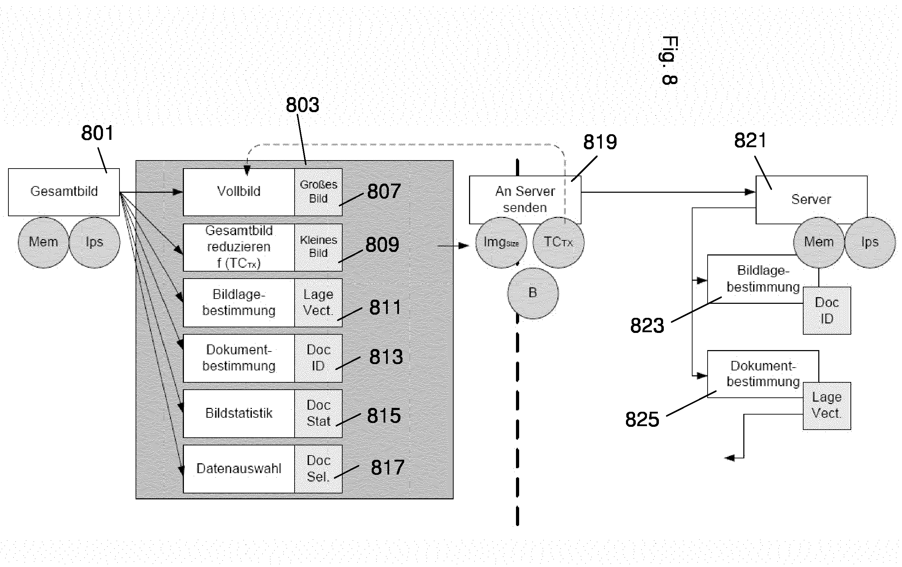

Fig. 8 zeigt ein Ablaufdiagramm eines Verfahrens zur Dokumentenerkennung, bei dem im Schritt 801 ein Gesamtbild eines Dokumentes mittels eines Mobilgerätes, beispielsweise der Vorrichtung aus Fig. 1, erfasst wird. Mit Mem ist der Arbeitsspeicher und mit (IPS: instructions per second) ist die Verarbeitungleistung des Mobilgerätes bezeichnet.

Das Gesamtbild kann beispielsweise das Dokumentenmerkmal repräsentieren. Im Schritt 803 kann das Gesamtbild verarbeitet werden. Hierzu können beispielsweise folgende Verarbeitungsschritte durchgeführt werden: Vollbilderfassung im Schritt 807, Gesamtbildreduktion f(TC_{TX}) im Schritt 809, Bildlagebestimmung im Schritt 811, Dokumentbestimmung im Schritt 813, Bildstatistikerfassung im Schritt 815 oder Datenauswahl im Schritt 817. Bei der Reduktion des Gesamtbildes entsteht ein kleineres Bild. Durch die Bildlagebestimmung wird die Bildlage beispielsweise vektoriell erfasst. Durch die Dokumentenbestimmung wird beispielsweise die Dokumentenidentifikation (Doc ID) erfasst. Auf der Basis der Bildstatistik kann beispielsweise die Auftretenshäufigkeit bestimmter Bildmerkmale oder Dokumentenmerkmale festgehalten werden, wodurch eine Dokumentenstatistik (Doc Stat) erfasst wird. Bei der Datenauswahl werden vorbestimmte Daten ausgewählt, wodurch eine Dokumentenselektion (Doc Sel.) durchgeführt wird. Die im Schritt 803 ausführbaren Algorithmen, welche unterschiedlich sein können, können zu verschiedenen Ergebnissen in den Schritte 807 bis 817 führen. Diese können in Abhängigkeit von der Mem und/oder IPS und sowie der Übertragungsgeschwindigkeit (TCtx) an den Server gesendet. Eine lokale Berechnung findet dabei gemäß einer Ausführungsform nicht statt.

In Abhängigkeit von den verfügbaren Ressourcen wird entschieden, ob die Dokumentenerkennung lokal durchgeführt werden soll oder ob die im Schritt 803 gewonnenen Daten an einen entfernten Server übermittelt werden sollen.

Sind die verfügbaren Ressourcen für die lokale Dokumentenerkennung nicht ausreichend, so werden im Schritt 819 die Daten an einen Server 821 mittels einer Übertragungsschnittstelle, beispielsweise charakterisiert durch die Größe der zu übertragenden Daten, die Geschwindigkeit oder Bandbreite, ausgesendet. Hiernach können optional die Schritte 823 der Bildlagebestimmung oder 825 der Dokumentenbestimmung durchgeführt werden.

Zur Erfassung der verfügbaren Ressourcen kann beispielsweise die Rechenleistung eines mobilen Gerätes, beispielsweise der in Fig. 1 dargestellten Vorrichtung, bestimmt werden. Auf dieser Basis kann eine lokale Verarbeitungszeit erfasst werden. Ferner kann die Bandbreite des verfügbaren Kommunikationskanals zum Server bestimmt werden. Auf diese Weise kann die Übertragungszeit zum Server erfasst werden. Darüber hinaus können freie Ressourcen des Servers bei diesem abgefragt werden. Auf diese Weise kann die Verarbeitungszeit des Servers erfasst werden.

### Bezugszeichen:

- 100: Vorrichtung
- 101: Erfassungseinrichtung
- 103: Prozessor
- 105: Sender / Empfänger
- 107: Antenne
- 201: Erfassen
- 203: Durchführen
- 205: Aussenden
- 301: Quelldokument
- 305: Verfahren
- 307: Prüfung / Vergleich
- 309: Ergebnis
- 401: Verfahren
- 403: Vergleich
- 405: Ergebnis
- 407: Dokumentenerkennungsverfahren
- 409: Erweiterung
- 501: Bild
- 503: Server
- 505: Aussenden
- 507: Voranalyse
- 509: Aussenden
- 511: Datenauswahl
- 513: Fensterung
- 515: Histogramm
- 517: SIFT
- 519: FFT
- 521: Wavelet
- 523: OCR
- 525: Microschrift
- 527: Hologramm
- 601-619: Verfahrensschritte
- 701-719: Verfahrensschritte
- 801-825: Verfahrensschritte
- TB: Rücktransferzeit
- TF: Transferzeit
- TG: Abarbeitungszeit

## Patentansprüche

1. Vorrichtung zur Dokumentenerkennung, mit:
einer Erfassungseinrichtung (101) zum Erfassen eines Dokumentenmerkmals eines Dokumentes;
einem Prozessor (103), welcher ausgebildet ist, die Dokumentenerkennung lokal anhand des Dokumentenmerkmals durchzuführen, falls ein Verarbeitungskriterium zur lokalen Durchführung der Dokumentenerkennung mittels der Vorrichtung zur Dokumentenerkennung erfüllt ist; und
einem Sender (105), welcher ausgebildet ist, einen von dem Dokumentenmerkmal abhängigen Datensatz über ein Kommunikationsnetzwerk an eine Kommunikationsnetzwerkadresse auszusenden, falls das Verarbeitungskriterium zur lokalen Durchführung der Dokumentenerkennung mittels der Vorrichtung zur Dokumentenerkennung nicht erfüllt ist,
wobei das Verarbeitungskriterium erfüllt ist,
falls die verfügbaren Verarbeitungsressourcen der Vorrichtung zur Durchführung der Dokumentenerkennung ausreichend sind, und
wobei das Verarbeitungskriterium nicht erfüllt ist,
falls die verfügbaren Verarbeitungsressourcen der Vorrichtung zur Durchführung der Dokumentenerkennung nicht ausreichend sind,
so dass die Vorrichtung zur Dokumentenerkennung entscheiden kann, ob die Dokumentenerkennung gänzlich oder teilweise lokal oder mittels eines entfernten Servers durchgeführt werden soll,
wobei der Prozessor (103) ausgebildet ist, die verfügbaren Verarbeitungsressourcen der Vorrichtung zu bestimmen und zu ermitteln, ob die verfügbaren Verarbeitungsressourcen für die Dokumentenerkennung mittels des Prozessors ausreichend sind, wobei die verfügbaren Verarbeitungsressourcen zumindest die folgende Ressource umfassen: Verarbeitungszeit (TG) zur lokalen Durchführung der Dokumentenerkennung.

2. Vorrichtung gemäß Anspruch 1, wobei die Erfassungseinrichtung (101) eine optische Erfassungseinrichtung, insbesondere eine Digitalkamera ist oder wobei die Erfassungseinrichtung einen optischen Bildsensor umfasst.

3. Vorrichtung gemäß einem der vorstehenden Ansprüche, wobei der Prozessor (103) ausgebildet ist, die Datenübertragungsgeschwindigkeit des Kommunikationsnetzwerkes zu bestimmen.

4. Vorrichtung gemäß einem der vorstehenden Ansprüche, wobei der Prozessor (103) ausgebildet ist, den von dem Dokumentenmerkmal abhängigen Datensatz zu erzeugen.

5. Vorrichtung gemäß einem der vorstehenden Ansprüche, wobei der Prozessor (103) ausgebildet ist, den von dem Dokumentenmerkmal abhängigen Datensatz
durch eine Anonymisierung des Dokumentenmerkmals, welche eine Rekonstruktion des Dokumentenmerkmals unterbindet, zu erzeugen.

6. Vorrichtung gemäß einem der vorstehenden Ansprüche, welche ferner einen Empfänger (105) zum Empfangen eines Ergebnisses der Dokumentenerkennung von der Kommunikationsnetzwerkadresse über das Kommunikationsnetzwerk ansprechend auf das Aussenden des von dem Dokumentenmerkmal abhängigen Datensatzes aufweist.

7. Vorrichtung gemäß Anspruch 6, wobei das Ergebnis ein Teilergebnis der Dokumentenerkennung ist, und wobei der Prozessor (103) ausgebildet ist, das Teilergebnis für die Dokumentenerkennung zu verwenden.

8. Vorrichtung gemäß einem der vorstehenden Ansprüche, wobei der Sender (105) ausgebildet ist, den von dem Dokumentenmerkmal abhängigen Datensatz über das Kommunikationsnetzwerk an einen entfernten Server, welcher unter der Kommunikationsnetzwerkadresse erreichbar ist, zum Durchführen der Dokumentenerkennung auszusenden.

9. Vorrichtung gemäß einem der vorstehenden Ansprüche, welche ein mobiles Telekommunikationsgerät, insbesondere ein Smartphone ist.

10. Verfahren zur Dokumentenerkennung, mit:
Erfassen (201) eines Dokumentenmerkmals eines Dokumentes;
lokalem Durchführen (203) der Dokumentenerkennung anhand des Dokumentenmerkmals, falls ein Verarbeitungskriterium erfüllt ist, oder
Aussenden (205) eines von dem Dokumentenmerkmal abhängigen Datensatzes über ein Kommunikationsnetzwerk an eine Kommunikationsnetzwerkadresse, insbesondere zu einem entfernten Server, zur Dokumentenerkennung, falls das Verarbeitungskriterium nicht erfüllt ist,
wobei das Verarbeitungskriterium erfüllt ist,
falls die verfügbaren Verarbeitungsressourcen der Vorrichtung zur Durchführung der Dokumentenerkennung ausreichend sind, und
wobei das Verarbeitungskriterium nicht erfüllt ist,
falls die verfügbaren Verarbeitungsressourcen der Vorrichtung zur Durchführung der Dokumentenerkennung nicht ausreichend sind,
so dass die Vorrichtung zur Dokumentenerkennung entscheidet, ob die Dokumentenerkennung gänzlich oder teilweise lokal oder mittels eines entfernten Servers durchgeführt werden soll; und
Bestimmen der verfügbaren Verarbeitungsressourcen der Vorrichtung und Ermitteln ob die verfügbaren Verarbeitungsressourcen für die Dokumentenerkennung ausreichend sind, wobei die verfügbaren Verarbeitungsressourcen zumindest die folgende Ressource umfassen: Verarbeitungszeit (TG) zur lokalen Durchführung der Dokumentenerkennung.

## Claims

1. An apparatus for document identification, having:
a capture device (101) for capturing a document feature of a document;
a processor (103) that is designed to perform document identification locally using the document feature if a processing criterion for the local performance of document identification by means of the apparatus for document identification is satisfied; and
a transmitter (105) that is designed to send a data record that is dependent on the document feature via a communication network to a communication network address, if the processing criterion for the local performance of document identification by means of the apparatus for document identification is not satisfied,
wherein the processing criterion is satisfied,
if the available processing resources of the apparatus are sufficient for performing document identification, and
wherein the processing criterion is not satisfied,
if the available processing resources of the apparatus are not sufficient for performing document identification,
so that the apparatus for document identification can decide, if the document identification needs to be performed in full or in part locally or by means of a remote server,
wherein the processor (103) is designed to determine the available processing resources of the apparatus and to ascertain whether the available processing resources are sufficient for document identification by means of the processor, wherein the available processing resources comprise at least the following resource: processing time (TG) for performing document identification locally.

2. The apparatus as claimed in claim 1, wherein the capture device (101) is an optical capture device, particularly a digital camera, or wherein the capture device comprises an optical image sensor.

3. The apparatus as claimed in one of the preceding claims, wherein the processor (103) is designed to determine the data transmission speed of the communication network.

4. The apparatus as claimed in one of the preceding claims, wherein the processor (103) is designed to produce the data record that is dependent on the document feature.

5. The apparatus as claimed in one of the preceding claims, wherein the processor (103) is designed to produce the data record that is dependent on the document feature
by anonymization of the document feature, which prevents reconstruction of the document feature.

6. The apparatus as claimed in one of the preceding claims, which further has a receiver (105) for receiving a result of document identification from the communication network address via the communication network in response to the sending of the data record that is dependent on the document feature.

7. The apparatus as claimed in claim 6, wherein the result is a partial result of document identification, and wherein the processor (103) is designed to use the partial result for document identification.

8. The apparatus as claimed in one of the preceding claims, wherein the transmitter (105) is designed to send the data record that is dependent on the document feature via the communication network to a remote server that can be reached at the communication network address in order to perform document identification.

9. The apparatus as claimed in one of the preceding claims, which is a mobile telecommunication device, particularly a smartphone.

10. A method for document identification, having:
capturing (201) a document feature of a document;
performing (203) document identification locally using the document feature if a processing criterion is satisfied, or
sending (205) a data record that is dependent on the document feature via a communication network to a communication network address, particularly to a remote server, for document identification if the processing criterion is not satisfied,
wherein the processing criterion is satisfied,
if the available processing resources of the apparatus are sufficient for performing document identification,
wherein the processing criterion is not satisfied,
if the available processing resources of the apparatus are not sufficient for performing document identification,
so that the apparatus for document identification decides, if the document identification needs to be performed in full or in part locally or by means of a remote server,
determining the available processing resources of the apparatus and ascertaining whether the available processing resources are sufficient for document identification, wherein the available processing resources comprise at least the following resource: processing time (TG) for performing document identification locally.

## Revendications

1. Dispositif de reconnaissance de document, avec:
un dispositif de détection (101) pour détecter une caractéristique de document d'un document;
un processeur (103) qui est conçu pour effectuer la reconnaissance de document localement sur la base de la caractéristique de document si un critère de traitement pour effectuer localement la reconnaissance de document au moyen du dispositif de reconnaissance de document est satisfait; et
un émetteur (105) qui est conçu pour envoyer un enregistrement de données dépendant de la caractéristique de document via un réseau de communication à une adresse de réseau de communication si le critère de traitement pour effectuer localement la reconnaissance de document au moyen du dispositif de reconnaissance de document n'est pas satisfait,
dans lequel le critère de traitement est satisfait
si les ressources de traitement disponibles du dispositif sont suffisantes pour effectuer la reconnaissance de document, et
dans lequel le critère de traitement n'est pas satisfait
si les ressources de traitement disponibles du dispositif ne sont pas suffisantes pour effectuer la reconnaissance de document,
de sorte que le dispositif de reconnaissance de document peut décider si la reconnaissance de document doit être effectuer totalement localement ou en partie localement ou au moyen d'un serveur distant,
dans lequel le processeur (103) est conçu pour déterminer les ressources de traitement disponibles du dispositif et pour déterminer si les ressources de traitement disponibles sont suffisantes pour la reconnaissance de document par le processeur, les ressources de traitement disponibles comprenant au moins la ressource suivante: temps de traitement (TG) pour effectuer la reconnaissance de document.

2. Dispositif selon la revendication 1, dans lequel le dispositif de détection (101) est un dispositif de détection optique, en particulier un appareil photo numérique, ou dans lequel le dispositif de détection comprend un détecteur à formation d'images optique.

3. Dispositif selon l'une des revendications précédentes, dans lequel le processeur (103) est conçu pour déterminer la vitesse de transmission de données du réseau de communication.

4. Dispositif selon l'une des revendications précédentes, dans lequel le processeur (103) est conçu pour générer l'enregistrement de données dépendant de la caractéristique du document.

5. Dispositif selon l'une des revendications précédentes, dans lequel le processeur (103) est conçu pour générer l'enregistrement de données dépendant de la caractéristique de document en anonymisant la caractéristique de document, ce qui empêche la reconstruction de la caractéristique de document.

6. Dispositif selon l'une des revendications précédentes, comprenant en outre un récepteur (105) pour recevoir un résultat de la reconnaissance de document de l'adresse de réseau de communication via le réseau de communication en réponse à la transmission de l'enregistrement de données dépendant de la caractéristique du document.

7. Dispositif selon la revendication 6, dans lequel le résultat est un résultat partiel de la reconnaissance de document, et dans lequel le processeur (103) est conçu pour utiliser le résultat partiel pour la reconnaissance de document.

8. Dispositif selon l'une des revendications précédentes, dans lequel l'émetteur (105) est conçu pour transmettre l'enregistrement de données dépendant de la caractéristique du document via le réseau de communication à un serveur distant, lequel est accessible à l'adresse du réseau de communication, afin d'effectuer la reconnaissance du document.

9. Dispositif selon l'une des revendications précédentes, qui est un dispositif de télécommunication mobile, en particulier un smartphone.

10. Procédé de reconnaissance de document, avec:
détecter (201) une caractéristique de document d'un document;
effectuer localement (203) une reconnaissance de document sur la base de la caractéristique de document si un critère de traitement est satisfait, ou
envoyer (205) un enregistrement de données dépendant de la caractéristique de document via un réseau de communication à une adresse de réseau de communication, en particulier à un serveur distant, pour la reconnaissance de document si le critère de traitement n'est pas satisfait,
dans lequel le critère de traitement est satisfait
si les ressources de traitement disponibles du dispositif sont suffisantes pour effectuer la reconnaissance de document, et
dans lequel le critère de traitement n'est pas satisfait
si les ressources de traitement disponibles du dispositif ne sont pas suffisantes pour effectuer la reconnaissance de document,
de sorte que le dispositif de reconnaissance de document décide si la reconnaissance de document doit être effectuer totalement localement ou en partie localement ou au moyen d'un serveur distant,
déterminer les ressources de traitement disponibles du dispositif et déterminer si les ressources de traitement disponibles sont suffisantes pour la reconnaissance de document, les ressources de traitement disponibles comprenant au moins la ressource suivante: temps de traitement (TG) pour effectuer la reconnaissance de document.
